# EUROPÄISCHE PATENTSCHRIFT

(11) **EP 1 277 715 B1**
(45) Veröffentlichungstag und Bekanntmachung des Hinweises auf die Patenterteilung: **12.01.2005**
(21) Anmeldenummer: 02015386.2
(22) Anmeldetag: 10.07.2002
(51) Int. Cl.: C04B 35/573, C04B 35/80, F16D 69/02, B32B 18/00

(54) **Mehrschichtiger Keramik-Verbund**
Multilayer ceramic composite
Composite céramique multicouche

(30) Priorität: 11.07.2001 DE 10133635
(43) Veröffentlichungstag der Anmeldung: 22.01.2003
(73) Patentinhaber: SGL CARBON AG, 65203 Wiesbaden (DE)
(72) Erfinder: Bauer, Moritz, 86153 Augsburg (DE); Heine, Michael, Dr., 86695 Allmannshofen (DE); Zimmermann-Chopin, Rainer, Dr., 86679 Ellgau (DE); Christ, Martin, 86517 Wehringen (DE); Kienzle, Andreas, Dr., 86672 Thierhaupten (DE); Gruber, Udo, 86356 Neusäss (DE); Rosenlöcher, Jens, 86153 Augsburg (DE)

(56) Entgegenhaltungen:
- EP-A- 0 467 686
- US-A- 4 795 677
- US-A- 5 246 736
- US-A- 5 686 144
- HAUG ET AL: "Method for manufacture of oxidation-resistant fiber-reinforced ceramics" WERKST. VERFAHRENSTECH, SYMPOSIUM, WERKSTOFFWOCHE, XX, XX, 1997, Seiten 943-955, XP002105058

## Beschreibung

Die vorliegende Erfindung betrifft einen mehrschichtigen Keramik-Verbund gemäß dem Oberbegriff des Patentanspruchs 1.

Kohlenstoffhaltige Verbundwerkstoffe, wie sie beispielsweise für Bremsenanwendungen eingesetzt werden, sind vor allem aus dem Luftfahrtbereich und dem Bereich der Rennfahrzeuge bekannt. Sie bieten den Vorteil guter tribologischer Eigenschaften bis zu höchsten Belastungen und Temperaturen.

Weiteste Verbreitung haben hierbei Materialien aus kohlenstofffaserverstärkten Kohlenstoffen (CFC oder C/C). Sie enthalten Kohlenstofffasern in Form von Matten, Geweben oder andersgearteten Faserflächengebilden, die zur Bildung dreidimensionaler Körper übereinander gestapelt werden und hierauf mit Kohlenstoff nachverdichtet werden. Diese Nachverdichtung kann durch mehrmaliges Imprägnieren mit sog. Kohlenstoff-Precursor-Materialien (Substanzen, die sich unter Pyrolysebedingungen unter Bildung von Kohlenstoff zersetzen) wie Pechen oder Harzen, und deren anschließende Pyrolyse zu Kohlenstoff, oder durch Abscheidung von sog. Pyrokohlenstoff aus der Gasphase (CVI, Chemical Vapour Infiltration) erfolgen.

Verbundwerkstoffe für tribologische Anwendungen und insbesondere Bremsscheiben können vom Aufbau her in zwei Zonen unterschiedlichen Anforderungsprofils und zumeist auch unterschiedlicher Werkstoffeigenschaften und Zusammensetzung unterteilt werden.

Die außenliegende, mit einem zweiten Körper (z. B. dem Bremsbelag) tribologisch zusammenwirkende und dem Verschleiß exponierte Zone ist die Reibfläche, die sich durch die besonderen Reibund Verschleißeigenschaften auszeichnet. Das darunterliegende Material ist die Tragzone (Kernkörper), deren Aufgabe im wesentlichen nur darin besteht, die Reibkräfte aufzunehmen und an die Fixierung weiterzuleiten, sowie die Reib- oder Bremsenergie aufzunehmen und abzuleiten.

Seit kurzem werden auch vermehrt Verbundwerkstoffe mit keramischer Matrix entwickelt. Hierbei sind diejenigen Materialien von besonderem Interesse, die aus Kohlenstofffasern und einer Matrix aus Siliciumcarbid- (SiC), oder Si/SiC-haltigen (zusätzliche Siliciumphasen) Matrices aufgebaut sind. Hierzu zählen insbesondere die sogenannten C/SiC-Werkstoffe, die sich aus Kohlenstofffasern oder kohlenstoffhaltigen Fasern und einer Matrix aus Kohlenstoff (C), Si und SiC zusammensetzen. Derartige Verbundwerkstoffe sind unter anderem aus der DE 198 56 721, DE 197 11 829 und der DE 197 10 105 bekannt.

Für die Materialeigenschaften - insbesondere die Festigkeit und Steifigkeit - ist der Schutz der Verstärkungsfasern durch Beschichtung mit Kohlenstoff oder kohlenstoffhaltigen Verbindungen von großer Bedeutung und üblich.
Allen aufgeführten Materialien ist gemeinsam, daß sie Kohlenstoff in Faserform oder in der Matrix enthalten, und daß die Werkstoffe unter den Anwendungsbedingungen auf Temperaturen erhitzt werden, bei denen im Dauerbetrieb eine merkliche Oxidation des Kohlenstoffs stattfindet. Die Oxidation wird dadurch unterstützt, daß die angeführten Materialien im allgemeinen im Urzustand - das heißt ohne Nachbehandlung bzw. zusätzliche Schutzmaßnahmen für Fasern oder Matrixphasen, die elementaren Kohlenstoff enthalten- eine nicht unwesentliche offene Porosität besitzen. Durch Oxidation und den dadurch verursachten Abbrand des Kohlenstoffs wird das Gefüge geschwächt und die Festigkeit verringert. Im Falle von Bremsscheiben kann diese Schwächung besonders für die Funktionalität der Tragzone sehr nachteilig sein, da ein Materialversagen im Bereich der Fixierungen von Brems- oder Reibscheiben zu einem Totalversagen der Konstruktion führen kann.

Der Effekt der oxidativen Schädigung ist beispielsweise durch den Gewichtsverlust der Verbundwerkstoffe während des Einsatzes nachzuverfolgen.

Aus diesem Grunde müssen Verbundwerkstoffe für tribologische Anwendungen und insbesondere Hochleistungs-Bremsscheiben mit Kemkörpern oder Tragzonen aus kohlenstoffhaltigem Material effektive Oxidationsschutzmechanismen für die Tragzone besitzen. Da sich die physikalischen Eigenschaften, insbesondere der thermische Ausdehnungskoeffizient und die chemischen Eigenschaften unterschiedlicher CFC- oder unterschiedlicher C/SiC- oder SiSiC-Materialien (mit Silicium infiltrierte Siliciumcarbid-haltige Materialien) stark unterscheiden können, ist auch die Wirksamkeit eines jeden Oxidationsschutzsystems stark unterschiedlich.

### Für den Oxidationsschutz gibt es verschiedene Lösungsansätze:

Das Aufbringen von Oxidationsschutz-Deckschichten ist eine der gängigsten Methoden. Gerade bei den CFC- und C/SiC-Werkstoffen ist es für den Oxidationsschutz von besonderer Bedeutung, daß diese Materialien von einem feinen Rißgefüge durchzogen sind, das sich unter thermischer Wechsellast ausdehnen und schließen kann. Unter mechanischer Beanspruchung werden zudem auch neue Risse generiert.

Daher sind besonders diejenigen Oxidationsschutzschichten von großem Interesse, die selbstheilend sind. Der Mechanismus der Selbstheilung basiert auf der Eigenschaft, daß die Schutzschichten bei der Anwendungstemperatur aufschmelzen und neu gebildete Risse wieder versiegeln können.

Derartige Systeme sind beispielsweise in EP 0 619 801 und EP 0 375 537 beschrieben. Nachteilig ist bei diesen Systemen die Tatsache, daß sich die als Glasschicht ausgebildete Schutzschicht als Träger der selbstheilenden Eigenschaften zum Schutz der Tragzone gerade auf der Deckschicht, also der äußersten Fläche, befinden muß. Aufgrund der Erweichung beziehungsweise des Aufschmelzens dieser Schicht bei der Anwendungstemperatur wird das Reibverhalten in hohem Maße verschlechtert.

Eine weitere Möglichkeit der Rissversiegelung unter Anwendungsbedingungen bietet der Zusatz von hochschmelzenden Elementen, binären oder multinären Verbindungen, beispielsweise Borverbindungen, die bei erhöhter Temperatur unter Luftzutritt zumindest teilweise zu Oxiden wie B₂O₃ beziehungsweise niedrig schmelzenden Gläsern wie Boratgläsern oxidieren. In US 5,536,574 wird ein zweilagiges Deckschichtsystem auf einem CFC-Körper beschrieben. Der CFC-Körper wird mit einem Gemisch aus Si, SiC und Al₂O₃ beschichtet und hierauf mit einer borhaltigen Mischung boriert. Danach wird eine zweite borhaltige Schicht aufgetragen. Auch hier erweicht die äußerste Schicht bei Anwendungstemperatur; daher kann die Funktion der tribologisch aktiven Fläche nicht gewahrt bleiben.

Für die Reibeigenschaften der Deckschicht erweisen sich nämlich die aus den borhaltigen Verbindungen gebildeten B₂O₃-Gläser als ausgesprochen schädlich.

Als eine weitere Variante wird in US 5,962,103 die Verwendung einer borhaltigen Si/SiC-Matrix vorgeschlagen. Hierdurch können auch tief im Verbundwerkstoff liegende Risse durch Aufschmelzen der bei Oxidation gebildeten Borverbindungen geheilt werden.

Nachteilig für die Anwendung ist jedoch hierbei, daß sich die Matrixeigenschaften im Oxidationsfall und unter Hochtemperaturbedingungen, insbesondere die Steifigkeit und Festigkeit, durch die Bildung von niedrigschmelzenden B₂O₃-Gläsern drastisch verschlechtern.

Als oxidationsempfindlich werden hier solche Verstärkungsfasern und/oder Matrixmaterialien bezeichnet, die bei erhöhter Temperatur (d. i. bei Temperaturen, die sich während der Anwendung einstellen können, und die oberhalb ca. 400°C liegen) oxidativ abgebaut werden und dadurch zu einer Schwächung des Verbundwerkstoffs führen können. Insbesondere Kohlenstoff als Bestandteil der Matrix oder in Faserform ist oxidationsempfindlich, wobei die Oxidationsempfindlichkeit des letzteren auf bekannte Weise (insbesondere gemäß der Lehre der DE 197 10 105, deren diesbezüglicher Inhalt durch die Bezugnahme in die Offenbarung eingeschlossen wird) durch geeignete Beschichtung der Fasern vermindert werden kann.

Aufgabe der Erfindung ist es daher, die Tragzone oder Kernkörper einer mit oxidationsempfindlichen Fasern verstärkten Verbundkeramik, die auch oxidationsempfindliche Anteile in der Matrix enthalten kann, insbesondere aus kohlenstofffaserverstärktem SiC, C/SiC, oder Si-SiC, vor einer oxidativen Schädigung, insbesondere durch Luftzutritt, durch selbstheilende und rissversiegelnde Materialien zu schützen, ohne die mit ihr verbundene Deckschicht aus Verbundkeramik, die insbesondere für den reibenden Verschleiß vorgesehen ist und welche dem Luftzutritt ausgesetzt ist, hinsichtlich Zusammensetzung und Eigenschaften zu verändern.

Die Erfindung löst die Aufgabe durch Bereitstellung eines mehrschichtigen Verbundkeramikkörpers, der zwischen der Tragzone und der Deckschicht eine dem Verbundwerkstoff artverwandte Schutzschicht aufweist, die Additive für die Ausbildung selbstheilender Schichten enthält. Als Additive können hier insbesondere verschiedene borhaltige Verbindungen und deren Oxidationsprodukte, oder Alkalialumosilikate eingesetzt werden.

Unter "artverwandt" wird hier verstanden, daß die Matrix der betreffenden Schicht im wesentlichen aus mindestens einer der Matrixphasen der Tragzone oder der Deckschicht aufgebaut ist. Die Matrixzusammensetzung der betreffenden Schicht kann dabei auch noch Elemente der in den Additiven enthaltenen Elemente beinhalten.
So ergibt sich beispielsweise für den bevorzugten Fall, einer aus faserverstärktem C/SiC aufgebauten Tragzone, dass die Matrix der betreffenden artverwandten Schicht im wesentlichen aus Si und/oder SiC aufgebaut sein kann. Für den Fall, dass der Verbundkörper aus einer Tragzone aus einem CFC-Werkstoff und einer Deckschicht aus Si-SiC aufgebaut ist, wäre die betreffende Schicht dann artverwandt, wenn deren Matrix überwiegend aus C, oder Si und/oder SiC aufgebaut ist.

Gegenstand der vorliegenden Erfindung ist daher ein mehrschichtiger Keramik-Verbund enthaltend mindestens eine Tragzone oder Tragschicht, die oxidationsempfindliche Verstärkungsfasern sowie eine Matrix umfaßt, wobei auch die Matrix oxidationsempfindliche Anteile enthalten kann,
und mindestens eine Deckschicht, dadurch gekennzeichnet, daß sie mindestens eine zusätzliche artverwandte Schutzschicht aufweist, die sich zwischen Tragzone und Deckschicht befindet, und die Additive enthält, die selbstheilende Schichten ausbilden.

Bevorzugt haben die Schichten des Mehrschicht-Verbundes die äussere Gestalt von Kreisscheiben oder flachen Zylindern. Eine derartige rotationssymmetrische Gestalt ist für die bevorzugte Anwendung als Reibscheibe (Brems- oder Kupplungsscheibe) erforderlich.

Der Schichtenaufbau der erfindungsgemäßen Keramik-Verbunde ist aus den Abbildungen (Mikrophotographien) zu ersehen. Dabei sind dargestellt
- in Fig. 1: ein Schnitt durch einen Keramik-Verbund, in dem eine Schicht zwischen Tragzone und Deckschicht angeordnet ist, die kein erfindungsgemäßes glasbildendes Additiv enthält
- in Fig. 2: ein Schnitt durch einen Keramik-Verbund, in dem eine Schicht zwischen Tragzone und Deckschicht angeordnet ist, die ein erfindungsgemäßes, hier Bor-haltiges Additiv enthält.

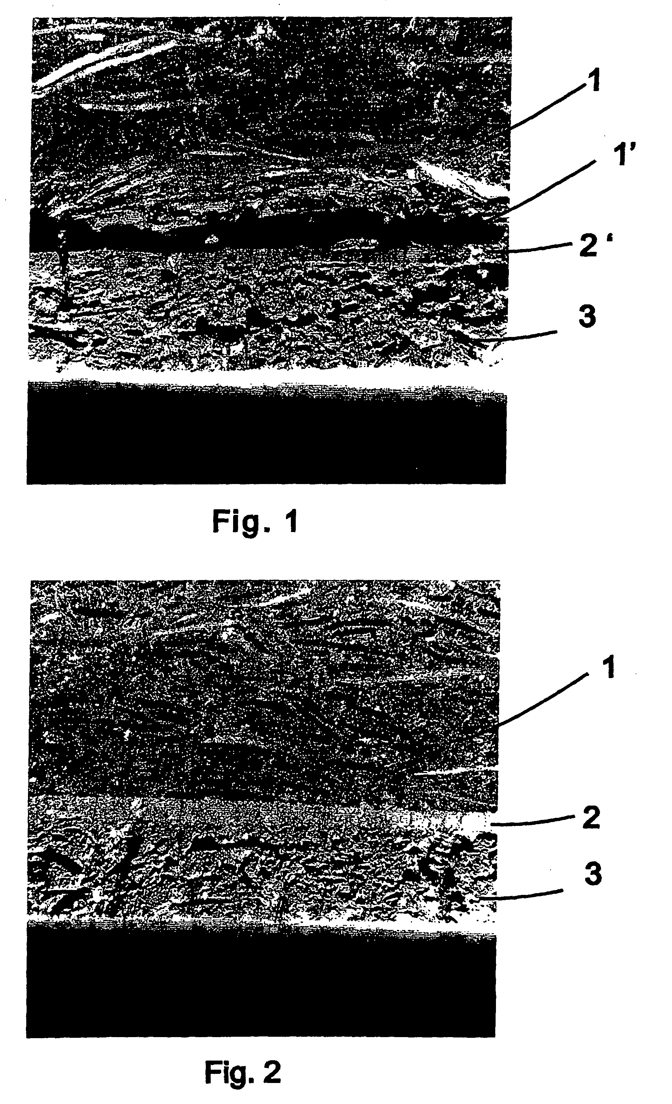

Die Fig. 1 zeigt eine Referenz - C/SiC-Platte umfassend Tragzone **1**, eine Sperrschicht **2'** ohne glasbildendes Additiv und eine Deckschicht **3** nach 15 h Lagerung bei 800 °C im Luftstrom. Die oxidative Schädigung ist durch Porenbildung in den Verbundwerkstoffen zu erkennen. Es ist deutlich zu erkennen, daß sich zwischen der Tragzone **1** und der Sperrschicht **2'** eine porendurchsetzte Zone gebildet hat (oxidierte Tragzone **1'**).

In der Fig. 2 ist eine C/SiC-Platte gemäß der vorliegenden Erfindung in einer Mikrophotographie dargestellt, die wiederum eine Tragzone **1**, eine Sperrschicht **2** und eine Deckschicht **3** umfaßt; wobei jedoch hier die Sperrschicht **2** als glasbildendes Additiv eine Borverbindung (Titandiborid, TiB₂) enthält. Dies entspricht der Ausführungsform des Beispiels 3. Auch hier wurde wie bei dem in Fig. 1 dargestellten Verbund der Schnitt und die Photographie des Verbundes nach 15 h Lagerung bei 800 °C im Luftstrom angefertigt. Die Porenbildung durch oxidative Schädigung ist nur noch in der Deckschicht 3 zu erkennen.

Die Erfindung betrifft weiter ein Verfahren zum Schutz der Tragzone eines mehrschichtigen faserverstärkten Keramik-Verbundwerkstoffs, beispielsweise einer C/SiC-Bremsscheibe, vor dem oxidativen Angriff des Luftsauerstoffs auf die oxidationsempfindlichen Verstärkungsfasern, wobei die Risse der Matrix in der Tragzone mit selbstheilenden Schichten verschlossen werden, ohne daß sich die Reibeigenschaften einer darüber liegenden Reibschicht verschlechtern.

Eine Variante ist das Verfahren zur Herstellung von mehrschichtigen Keramik-Verbunden, wobei ein die Tragzone bildender Kohlenstoff enthaltender Vorkörper und mindestens ein eine Deckschicht bildender, Kohlenstoff enthaltender Vorkörper mit einer Masse flächig verklebt werden, die bei Pyrolyse eine poröse, Kohlenstoff enthaltende Schicht ergibt, wobei die Klebemasse als glasbildende Additive Zusätze von hochschmelzenden Elementen, binären oder multinären Verbindungen mit Schmelztemperaturen von mindestens 1650 °C enthält, die durch Oxidation niedrigschmelzende Gläser mit einer Schmelztemperatur von höchstens 1250 °C ergeben, der verklebte Körper danach pyrolysiert wird, und der so gebildete kohlenstoffhaltige mehrschichtige Verbund durch Infiltration mit Silicium oder Siliziumlverbindungen und Reaktion zumindest eines Teils des Kohlenstoffs mit dem Silicium zu Siliciumcarbid stabilisiert wird. Unter den Siliziumverbindungen sind insbesondere Legierungen oder Si-Schmelzen mit Metallen aus der Gruppe Fe, Cr, Mo, Ti und A1 zu verstehen.

Eine weitere Variante ist ein Verfahren zur Herstellung von mehrschichtigen Keramik-Verbunden, wobei eine Preßform mit mindestens drei verschieden zusammengesetzten Mischungen befüllt wird, wobei die Füllhöhen für die jeweiligen Mischungen über die Fläche der Preßform im wesentlichen konstant sind, und die Mischungen die Vorläufer von Tragzone, Schutzschicht und Deckschicht sind, wobei die zur Schutzschicht führende Mischung als glasbildende Additive Zusätze von hochschmelzenden Elementen, binären oder multinären Verbindungen mit Schmelztemperaturen von mindestens 1650 °C enthält, die durch Oxidation niedrigschmelzende Gläser mit einer Schmelztemperatur von höchstens 1250 °C ergeben, der gepreßte Körper danach pyrolysiert wird, und der so gebildete kohlenstoffhaltige mehrschichtige Verbund durch Infiltration mit Silicium und Reaktion zumindest eines Teils des Kohlenstoffs mit dem Silicium zu Siliciumcarbid stabilisiert wird.

Die glasbildenden Additive in der Schutzschicht sind bevorzugt ausgewählt aus hochschmelzenden Elementen, binären oder multinären Verbindungen mit Schmelztemperaturen oberhalb 1450 °C, bevorzugt oberhalb der Prozesstemperatur zur Bildung der SiC-haltigen Matrix und besonders bevorzugt oberhalb 1650°C, die durch Oxidation niedrigschmelzende Gläser mit einer Schmelztemperatur von höchstens 1250 °C, bevorzugt höchstens 1000°C besonders bevorzugt im Bereich von 500-900°C ergeben. Insbesondere sind die Additive aus Bor und nichtoxidischen Borverbindungen ausgewählt.

Der Mechanismus des Oxidationsschutzes der Tragzone ist im Falle von borhaltigen Schutzschichten die Oxidation der borhaltigen Verbindungen zu selbstheilenden Boroxid-haltigen Gläsern, welche die Risse unterhalb der Deckschicht versiegeln.

Zusammenfassend läßt sich die bevorzugte Herstellung von mehrschichtigen Keramik-Verbunden mit Oxidationsschutzschichten gemäß der Erfindung beschreiben als Abfolge der Schritte
- Herstellung eines kohlenstoffhaltigen Vorkörpers aus Deckschicht(en), Schutzschicht(en) und Tragzone, wobei die Schutz- oder Sperrschicht insbesondere borhaltige Verbindungen enthält,
- Bildung eines Verbundes mit SiC-haltiger Matrix, die alle drei unterschiedlichen Zonen beziehungsweise Schichten fest miteinander verbindet,
- und die Umsetzung der Schutzschicht in eine insbesondere borhaltige Keramik oder Verbundkeramik.

Der zweite und dritte Schritt können (bei entsprechender Temperatur für die Bildung der SiC-haltigen Phase in der Matrix) gemeinsam erfolgen.

Die Bildung der SiC-haltigen Matrix kann hierbei durch Gasphaseninfiltration (CVI), Flüssig-Silicierung (LSI), oder durch die Precursor-Pyrolyse von SiC-Precursor-Polymeren erfolgen. Bevorzugt ist die Infiltration des Vorkörpers mit flüssigem Silicium, Siliciumlegierungen oder Silicium-Verbindungen.

Bevorzugt enthält die Matrix des Verbundwerkstoffes der Tragzone und der Deckschicht einen Massenanteil von mindestens 25 % SiC und weitere Phasen, enthaltend Si oder Si-Legierung, und/oder Kohlenstoff, in elementarer Form oder als Verbindung. Die Zusammensetzungen des Verbundwerkstoffes der Tragzone und der Deckschicht sind im allgemeinen unterschiedlich.

Erfindungsgemäß ist es aber auch möglich die Bildung der SiC-haltigen Matrix auf die äussere Zone des Verbundwerkstoffes zu beschränken. Dies wird insbesondere dadurch erreicht, dass der kohlenstoffhaltige Vorkörpers der Tragzone nur teilweise oder oberflächlich infiltriert wird. Dadurch behält der Verbundwerkstoff insbesondere einen CFC-Kern zurück.

Obwohl SiC-haltige Matrices erfindungsgemäß bevorzugt sind, ist die Gegenwart von SiC in der Matrix nicht zwingend. Dies ist beispielsweise dann der Fall, wenn durch Si-haltige reaktive Füllstoffe in den kohlenstoffhaltigen Vorkörpern durch CVI-Prozesse eine nitridische, insbesondere Si₃N₄-Matrix aufgebaut wird.

Das Verhältnis der Dicken von Tragzone und Deckschicht ist abhängig vom Anwendungsfall; üblicherweise ist die Dicke der Deckschicht kleiner als 50 % der Dicke der Tragzone.

Ein weiterer Aspekt der Erfindung ist die Anwendung eines mit kohlenstoffhaltigen Fasern verstärkten keramischen Verbundes mit einer Tragzone und mindestens einer als Reibzone ausgebildeten Deckschicht, die jeweils über eine, insbesondere Borverbindungen enthaltende, Schutz- oder Sperrschicht miteinander verbunden sind, als Bremssscheibe, Kupplungsscheibe, Bremsbelag, oder für andere Bauteile mit tribologischer Verwendung.

In diesen Anwendungen ist die Deckschicht als Reibzone oder Reibschicht ausgebildet, deren Dicke üblicherweise kleiner als 20 % der Dicke der Scheibe ist, jedoch mindestens 0,2 mm ist.

Für die Verwendung als Bremsscheibe umfaßt der Verbund eine Tragzone und mindestens eine Deckschicht, wobei Tragzone und Deckschicht jeweils durch eine Schutzschicht flächig verbunden sind.

Überraschenderweise hat es sich in den der vorliegenden Erfindung zugrundeliegenden Untersuchungen herausgestellt, daß es für die Lebensdauer des gesamten Bauteils, insbesondere für Bremsscheiben, weniger entscheidend ist, ob die Reibzone zusätzlich vor oxidativem Angriff geschützt wird, sondern vielmehr, daß die Tragzone geschützt wird.

Es ist daher ein Ziel der Erfindung, nur die Tragzone mit einem wirkungsvollen Oxidationsschutz auszustatten und die Reibzone zugunsten des Beibehalts der für die Reibeigenschaften optimierten Materialzusammensetzung nicht mit einem Oxidationsschutz zu versehen.

Ein weiterer Aspekt der Erfindung ist es sogar, die Reibzone weniger vor Oxidation zu schützen als die Tragzone, da sich hierdurch ein am Bauteil auftretender oxidativer Verschleiß zuerst an der (außen gelegenen) Reibzone zeigt, was sich beispielsweise optisch gut erkennen läßt. Hierdurch besteht die Möglichkeit, das Bauteil zu ersetzen, bevor der oxidative Verschleiß der Tragzone zum Werkstoffversagen führen kann.

Der Aufbau und die Zusammensetzung der Deckschicht und der Tragzone können sich sehr ähnlich und je nach Anforderungsprofil sogar identisch sein. Der Aufbau und die Zusammensetzung der Schutz- oder Sperrschicht unterscheiden sich von diesen im wesentlichen durch die insbesondere borhaltigen Additive, und den Gehalt an Verstärkungsfasern.

Zur Herstellung der kohlenstoffhaltigen Vorkörper, aus denen Trag- und Deckschicht aufgebaut sind, werden Fasern oder Faserbündel, die isotrop oder anisotrop und mit oder ohne Texturierung angeordnet sein können, und gegebenenfalls weiteren Füllstoffen durch Peche und Harze gebunden. Für die Herstellung dieser Vorkörper kann auf in der CFC-Technologie bekannte Herstellungsmethoden zurückgegriffen werden.

Besonders bevorzugt sind CFC-Zusammensetzungen enthaltend beschichtete Kurzfaserbündel, die quasi-isotrop ausgerichtet in einer porösen Kohlenstoffmatrix vorliegen. Bei den eingesetzten Fasern sind im wesentlichen alle hochtemperaturfesten oxidischen und nichtoxidischen Verstärkungsfasern verwendbar. Verbundwerkstoffe mit oxidischen Fasern benötigen insbesondere dann einen Oxidationsschutz, wenn die Fasern mit Kohlenstoff beschichtet sind. Bevorzugt sind nichtoxidische Keramikfasern auf der Basis von Kohlenstoff, Silicium, Bor und/oder Stickstoff und deren Verbindungen, besonders bevorzugt sind Kohlenstoff- oder Graphitfasern.

Der kohlenstoffhaltige Vorkörper, aus der die Sperrschicht gebildet wird, enthält darüber hinaus noch in bevorzugter Weise Bor oder Borverbindungen als Additive. Andere Additive, die zu niedrigschmelzenden Gläsern führen, die unter Anwendungsbedingungen die gewünschte Oxidationsschutzwirkung entfalten, sind beispielsweise Alkali- und/oder Erdalkali und Aluminiumverbindungen, die unter den Anwendungsbedingungen Alkalialumosilikate ergeben, insbesondere Mischungen aus der Gruppe Li-, Na-, K-, Mg-, Ca-, und Al-Oxid.

Die der Reibzone, der Sperrschicht und der Tragzone entsprechenden kohlenstoffhaltigen Vorkörper beziehungsweise Teile der Vorkörper, bevorzugt CFC, können einzeln oder in einem gemeinsamen Schritt gefertigt und gefügt werden. Vorteilhafterweise werden preßfähige Massen aus Fasermaterial, Zuschlagstoffen und gegebenenfalls Additiven, insbesondere borhaltigen Additiven, mit härtbaren kohlenstoffhaltigen Bindern hergestellt und in einer Preßform in eine endformnahe Geometrie überführt. In einer besonders bevorzugten erfindungsgemäßen Ausgestaltung werden die den Vorkörpern entsprechend unterschiedlich zusammengesetzten Preßmassen gemeinsam in der später im Bauteil gewünschten Reihenfolge in die Preßform eingefüllt, gepreßt und gehärtet.

Es ist aber auch möglich, die der Trag- oder Reibzone entsprechenden Vorkörper separat herzustellen und mit dem der Sperrschicht entsprechenden Vorkörper zu fügen. Die drei Vorkörper werden dann durch Aufbau einer gemeinsamen Matrix, bevorzugt SiC-haltig, unlösbar miteinander verbunden.

In einer weiteren vorteilhaften Ausgestaltung der Erfindung werden die der Trag- oder Reibzone entsprechenden Vorkörper separat hergestellt und durch eine Mischung mit Klebwirkung gefügt, wobei diese Klebezone im weiteren Verlauf der Fertigung in die Schutz- oder Sperrschicht umgewandelt wird.

Erfindungsgemäß ist diese Mischung mit Klebewirkung aus kohlenstoffhaltigen Feststoffen, Pech, Harz, Schutzschicht-bildenden, insbesondere borhaltigen Verbindungen und Lösungsmitteln zusammengesetzt. Die Zusammensetzung der Mischung ist wesentlich für die Wirksamkeit des Oxidationsschutzes und die Festigkeit der Verbindung zwischen der Reib- und der Tragzone.

Im Fall der Verwendung von borhaltigen Additiven wird deren Gehalt so gewählt, daß die Sperrschicht nach dem Aufbau der SiC-haltigen Matrix einen Gehalt von mindestens 5 % Bor, bezogen auf die Zahl der in dem Material der Schutzschicht enthaltenen Atome aufweist. Bevorzugt für den Borgehalt in der keramisierten beziehungsweise silicierten Sperrschicht sind 6 bis 80 % und besonders bevorzugt 7 bis 50 %.

Als Additive können bevorzugt elementares Bor und Borverbindungen aus der Gruppe der Metallboride, und der Si/C/B/N- oder C/B/N-Verbindungen, insbesondere Bor, Borcarbid, Calciumborid, Borsilicid, Aluminiumborid, Titanborid und Zirkonborid eingesetzt werden. Besonders bevorzugt sind Borcarbid (B₄C), TiB₂ und ZrB₂ und deren Mischungen. Es ist jedoch auch möglich, Alkali- und/oder Erdalkali- und Aluminiumverbindungen, insbesondere Mischungen aus der Gruppe Li-, Na-, K-, Mg-, Ca-, und Al-Oxid einzusetzen.

Die borhaltigen Verbindungen werden üblicherweise in pulvriger Form in die Mischung für die Sperrschicht eingetragen. Vorzugsweise ist die mittlere Partikelgröße der Pulver kleiner als 120 µm und besonders bevorzugt kleiner als 75 µm.

Si/C/B/N- oder C/B/N-Verbindungen können als flüssiges Polymer oder, in keramisierter Form, als Pulver eingetragen werden.

Der Gehalt an kohlenstoffhaltigen Feststoffen, Pech und Harz in der Mischung für die Sperrschicht wird so gewählt, daß sich bei den nachfolgenden thermischen Verfahrensschritten möglichst geringe Spannungen in dem fertigen Bauteil ergeben. Unter kohlenstoffhaltigen Feststoffen sind insbesondere Graphit, Kohlen, pyrolysierte Peche und kohlenstoffhaltige Fasern und/oder Faserbündel zu verstehen. In Abhängigkeit von der Zusammensetzung der Deckschichtmischung kann es von Vorteil sein auch ganz auf Fasern in der Sperrschichtmischung zu verzichten.
Üblicherweise liegt der Volumenanteil an Fasern innerhalb der Sperrschicht nach der Bildung der SiC-haltigen Matrix unterhalb von 80 %, bevorzugt unterhalb von 40 % und besonders bevorzugt unterhalb von 20 %. In einer weiteren Ausgestaltung der Erfindung liegt der Fasergehalt nach der Ausbildung der SiC-haltigen Matrix unter 5 %, insbesondere bei nahezu 0 %.

Die Menge der preßfähigen oder klebfähigen Mischung für die Sperrschicht wird so gewählt, daß die Dicke der Schicht oberhalb von 20 µm liegt, bevorzugt oberhalb 100µm. Üblicherweise liegt die Schichtdicke nach der Ausbildung der SiC-haltigen Matrix bei 0,02 bis 5 mm, bevorzugt bei 0,05 bis 3 mm und besonders bevorzugt bei 0,1 bis 1 mm.

Für den Aufbau der SiC-haltigen Matrix wird bevorzugt eine Flüssigsilicierung durchgeführt. Hierzu wird der kohlenstoffhaltige Vorkörper, der sowohl aus einem Teil durch einen gemeinsamen Preßvorgang, als auch durch das Fügen mehrerer mit klebrigen Mischungen gefügter Teile gefertigt sein kann, mit Silicium, oder einer Mischung aus Silicium oder Siliciumlegierung und/oder weiteren Metallen, in Kontakt gebracht. Das Silicium, das aus losem Pulver bestehen, oder mit unterschiedlichen Additiven gebunden als Formkörper vorliegen kann, wird auf die Oberflächen des Vorkörpers aufgebracht. Das Silicium kann des weiteren auch über Dochte zugeführt werden. Durch Erwärmung dieser Anordnung innerhalb eines Ofens unter Schutzgas oder Vakuum über die Schmelztemperatur des Siliciums wird die Schmelzinfiltration ausgelöst.

Die Mischungen aus Si und weiteren Metallen werden hierdurch als flüssige Siliciumlegierung infiltriert. Treibender Faktor der Infiltration von der Oberfläche bis in die Mitte des Bauteils sind die Kapillarität des kohlenstoffhaltigen Vorkörpers und die Reaktion des Silicium mit Kohlenstoff zu SiC.

Bevorzugt wird die Anordnung von Pulver, (Si-) Formkörper oder Dochten so gewählt, daß die Schmelze ausschließlich über die der Reibzone bzw. Deckschicht entsprechenden Oberflächen zugeführt wird. Dies ist die bevorzugte Variante, da hierdurch ein Austragen der die Schutzschicht bildenden, bevorzugt borhaltigen Additive aus der Sperrschicht in die Reibzone vermieden werden kann.

Während und nach der Schmelzinfiltration, in einem Ofen unter Schutzgas oder unter vermindertem Druck bei Temperaturen von 1500 bis 1800 °C, findet die Umsetzung des Kohlenstoffs mit Silicium zu Siliciumcarbid statt und auch die Umsetzung der die Sperrschicht bildenden Materialien in eine Keramik oder Verbundkeramik. Hierdurch werden alle Zonen des Verbundkörpers durchdringende artverwandte Matrices, insbesondere aus Si, SiC und C aufgebaut. Die Matrix einer jeden Werkstoffzone besteht im wesentlichen aus mindestens einer Komponente der Matrix einer der benachbarten Werkstoffzonen.
Je nach Reaktivität und Art der die Schutzschicht bildenden, insbesondere borhaltigen Verbindungen, der Art der Siliciumschmelze, der Temperatur und der Reaktionszeit, werden in der Sperrschicht unterschiedliche binäre oder multinäre Verbindungen, insbesondere Boride und Silicide neu gebildet. Hierdurch läßt sich die Reaktivität beziehungsweise Wirkstärke der Sperrschicht gezielt beeinflussen.

In einer vorteilhaften Weiterentwicklung der Erfindung wird das Bauteil vor dem ersten Einsatz einer Oxidationsglühung an Luft unterzogen. Temperatur und Zeit werden dabei so gewählt, daß die schutzschichtbildenden, insbesondere borhaltigen Verbindungen teilweise schon zu selbstheilenden insbesondere borathaltigen Gläsern umgesetzt werden. Bevorzugt ist hierbei die Ausbildung von Borosilikatgläsern, besonders bevorzugt mit Ti-, Al-, oder Zr-Oxidphasen, innerhalb der Sperrschicht und unterhalb der Reibzone.
Im allgemeinen enthält diese Sperrschicht Massenanteile von 1 bis 90 % an Oxidphasen, bevorzugt mindestens 2 bis höchstens 85 % und besonders bevorzugt mindestens 2,5 bis 80 %.

Werden als Additive der Schutzschicht Alkali-, Erdalkali- und Aluminiumoxide eingesetzt, enthält die Sperrschicht üblicherweise über 30 Gew% an Oxidphasen.

Die Keramik-Verbunde gemäß der Erfindung lassen sich als Brems- und Kupplungsscheiben für Fahrzeuge wie Automobile, Motorräder, für Schienenfahrzeuge und für Flugzeuge einsetzen. Die Verwendung ist insbesondere dann vorteilhaft, wenn große Kräfte übertragen oder hohe Energien aufgenommen werden müssen, oder die Deckschicht eine Funktionsschicht darstellt.

### Beispiele:

### Beispiel 1

Für die Herstellung einer innenbelüfteten Bremsscheibe wurden zunächst die CFC-Körper der Tragzone und der Reibzone separat gefertigt. Hierzu wurden jeweils preßfähige Mischungen aus mit Kohlenstoff beschichteten Kohlenstoff-Kurzfaserbündeln, Harzen und Pechen hergestellt und in Preßformen eingefüllt. In einer Presse wurden die Mischungen bei Temperaturen von 100 bis 180 °C ausgehärtet und zu porösen CFK-Teilen umgesetzt. Diese Teile wurden anschließend bei Temperaturen von 700 bis 1000 °C pyrolysiert und zu CFC-Teilen umgesetzt.

Im nächsten Schritt wurden die beiden CFC-Teile mit einer klebfähigen Mischung aneinandergefügt, die später die Sperrschicht ergab.

Der Feststoffanteil der Mischung der Klebschicht bestand aus Massenanteilen von 40 % Kohlenstoffkurzfasern mit einer Längenverteilung von 0,01 bis 0,5 mm, 40 % flüssigem Phenolharz und 20 % Zirkoniumdiboridpulver (ZrB₂). Die klebfähige Mischung wurde auf den Tragzonenkörper aufgetragen und der Reibzonenkörper wurde anschließend aufgepreßt. Hierauf erfolgte bei 120 bis 180 °C die Aushärtung der klebfähigen Mischung, deren Dicke danach ca. 500 bis 800 µm betrug.

Danach erfolgte die Silicierung des aus den beiden CFC-Teilen gefügten Bauteils. Hierzu wurde in üblicher Weise das Bauteil auf CFC-Dochte in Si-Granulat aufgesetzt und mit Si-Granulat überschichtet. In einem Vakuumofen wurde hierauf bei Temperaturen von 1600 bis 1900 °C das Silicium aufgeschmolzen, das geschmolzene Silicium in das poröse CFC-Bauteil infiltriert, wobei zumindest teilweise eine Reaktion mit dem Kohlenstoff in der Matrix und auf den Fasern zu SiC erfolgte.

Der Borgehalt innerhalb der Verbindungsschicht zwischen den beiden vorgefertigten Teilen (Tragund Reibzone) lag nach der Silicierung bei ca. 5 Gew%.

### Beispiel 1a

Beispiel 1 wurde wiederholt, wobei die Masse der der Sperrschicht entsprechenden Mischung zu einem Drittel aus TiB₂ und zu zwei Dritteln aus Phenolharz bestand; die Mischung enthielt keine Kohlenstoffasern.

### Beispiel 2

In Abwandlung des Beispiels 1 wurde eine klebfähige Mischung aus Massenanteilen von 20 % Kohlenstoffkurzfasern, 50 % B₄C und 30 % Phenolharz eingesetzt.

### Beispiel 3

Für die Herstellung einer Bremsscheibe wurden die CFC-Körper im Unterschied zu den Beispielen 1 und 2 nicht geklebt, sondern in einem Schritt gepreßt. Hierzu wurden 3 preßfähige Mischungen unterschiedlicher Zusammensetzung hergestellt und nacheinander in eine Preßform gefüllt. Die erste Mischung (entsprechend der späteren Reibzone) bestand aus beschichteten Kurzfaserbündeln geringerer Faserlänge als für die Tragzonenmischung, Phenolharz und Pech. Die zweite Mischung wurde über die erste geschichtet (entsprechend der späteren Sperrschicht), sie bestand aus einer Mischung aus 60 % Titandiborid (TiB₂) und 40 % Phenolharz. Hierüber wurde die der Tragzone entsprechende Mischung aus beschichteten Kurzfaserbündeln, Phenolharz und Pech geschichtet. Darauf folgten wieder die der Sperrschicht und die der Reibzone entsprechenden Mischungen. Die Masse wurde verpreßt und bei 120 bis 180 °C in einer Presse ausgehärtet.

Die Silicierung des CFC-Bauteils erfolgte wie im ersten Beispiel bei 1600 bis 1900 °C in einem Vakuumofen.

Es wurde ein zweiter Verbund mit denselben Abmessungen gefertigt gemäß diesem Beispiel, in dem jedoch die "Sperrschichtmischung" kein Titanborid, sondern lediglich Phenolharz und Kohlenstoffkurzfasern enthielt.

Probekörper aus den fertigen Bremsscheiben wurden in einem Ofen bei 800 °C bei einem Luftstrom von 100 l/h für 5 Stunden ausgelagert. Nach Erkalten wurden beide Scheiben radial geschnitten und die achsnahe Zone wurde photographiert. Es ist deutlich in den Photographien Fig. 1 und Fig. 2 zu sehen, daß im Fall der borhaltigen Sperrschicht (Fig. 2) keine oxidative Schädigung der Tragzone (1) erfolgte, während eine "Sperrschicht" (2') ohne ein derartiges glasbildendes Additiv (Fig. 1) keine Schutzwirkung zeigte; in der Fig. 1 ist zu erkennen, daß sich in der der Sperrschicht zugewandten Region der Tragzone (1) Hohlräume gebildet haben, ebenso wie - in beiden Fällen - in der Deckschicht (3).

### Verzeichnis der Abbildungen

- Fig. 1: Referenz-C/SiC-Platte mit Sperrschicht (2') ohne borhaltige Verbindung, Tragzone (1) und keramischer Deckschicht (3) nach 15 h Lagerung bei 800 °C im Luftstrom.
- Fig. 2: C/SiC-Platte mit TiB₂-haltiger Sperrschicht (2), Tragzone (1) und keramischer Deckschicht (3) nach Beispiel 3 nach 15 h Lagerung bei 800 °C im Luftstrom.

## Patentansprüche

1. Mehrschichtiger Keramik-Verbund enthaltend mindestens einen die Tragzone bildenden Verbundwerkstoff, der oxidationsempfindliche Verstärkungsfasern enthält und mindestens eine keramische Deckschicht, **dadurch gekennzeichnet, daß** die Deckschicht Verstärkungsfasern enthält und daß sowohl der die Tragzone als auch der die Deckschicht bildende Verbundwerkstoff eine Matrix aufweist, die einen Massenanteil von mindestens 25 % SiC und weitere Phasen, enthaltend Si oder Si-Legierungen, und/oder Kohlenstoff, in elementarer Form oder als Verbindung enthält, und der Keramik-Verbund mindestens eine zusätzliche Schutzschicht mit einer Matrix aufweist, die im wesentlichen aus mindestens einer der Matrixphasen der Tragzone oder der Deckschicht aufgebaut ist, und die sich zwischen Tragzone und Deckschicht befindet und die Additive enthält, deren Oxide niedrigschmelzende Gläser mit einer Schmelztemperatur von höchstens 1250°C sind.

2. Mehrschichtiger Keramik-Verbund nach Anspruch 1, **dadurch gekennzeichnet, dass** die Zusammensetzung des Verbundwerkstoffs der Deckschicht und der Tragzone unterschiedlich sind.

3. Mehrschichtiger Keramik-Verbund nach Anspruch 1 oder 2, **dadurch gekennzeichnet, daß** die Verstärkungsfasern ausgewählt sind aus Kohlenstoffasern, Graphitfasern und/oder kohlenstoffhaltigen Fasern.

4. Mehrschichtiger Keramik-Verbund nach mindestens einem der vorangegangenen Ansprüche, **dadurch gekennzeichnet, daß** die Additive in der Schutzschicht ausgewählt sind aus hochschmelzenden Elementen, oder binären oder multinären Verbindungen, die eine Schmelztemperatur von mindestens 1450 °C aufweisen.

5. Mehrschichtiger Keramik-Verbund nach Anspruch 4, **dadurch gekennzeichnet, daß** die Additive aus Bor und nichtoxidischen Borverbindungen ausgewählt sind.

6. Mehrschichtiger Keramik-Verbund nach Anspruch 5, **dadurch gekennzeichnet, daß** die Additive ausgewählt sind aus Bor, Borcarbid, Calciumborid, Borsilicid, Aluminiumborid, Titanborid und Zirkonborid.

7. Mehrschichtiger Keramik-Verbund nach Anspruch 1, 2, oder 3, **dadurch gekennzeichnet, daß** die Additive ausgewählt sind aus Alkali-, und/oder Erdalkali- und Aluminiumverbindungen, insbesondere deren Oxiden.

8. Mehrschichtiger Keramik-Verbund nach einem der vorangegangenen Ansprüche, **dadurch gekennzeichnet, daß** der Volumenanteil an Verstärkungsfasern in der Schutzschicht unterhalb von 80% liegt.

9. Mehrschichtiger Keramik-Verbund nach einem der vorangegangenen Ansprüche, **dadurch gekennzeichnet, daß** die Dicke der Schutzschicht 0,02 bis 5 mm beträgt.

10. Mehrschichtiger Keramik-Verbund nach einem der vorangegangenen Ansprüche, **dadurch gekennzeichnet, daß** die Dicke der Deckschicht weniger als 50 % der Dicke der Tragzone beträgt.

11. Mehrschichtiger Keramik-Verbund nach einem der vorangegangenen Ansprüche, **dadurch gekennzeichnet, daß** der Verbund die Gestalt einer zylindrischen Scheibe hat, und daß die Dicke der Deckschicht weniger als 20 % der Dicke der Scheibe beträgt, jedoch mindestens 0,2 mm.

12. Mehrschichtiger Keramik-Verbund nach einem der vorangegangenen Ansprüche, **dadurch gekennzeichnet, daß** der Verbund eine Tragzone und zwei Deckschichten umfaßt, wobei Tragzone und Deckschicht jeweils durch eine Schutzschicht flächig verbunden sind.

13. Verfahren zur Herstellung von mehrschichtigen Keramik-Verbunden gemäß Anspruch 1, **dadurch gekennzeichnet, daß** ein die Tragzone bildender Kohlenstoff enthaltender faserverstärkter Vorkörper und mindestens ein eine Deckschicht bildender, Kohlenstoff enthaltender Vorkörper mit einer Klebemasse flächig verklebt werden, die bei Pyrolyse eine poröse, Kohlenstoff enthaltende Schicht ergibt, wobei die Klebemasse als glasbildende Additive Zusätze von hochschmelzenden Elementen, binären oder multinären Verbindungen jeweils mit Schmelztemperaturen von mindestens 1450 °C enthält, die durch Oxidation niedrigschmelzende Gläser mit einer Schmelztemperatur von höchstens 1250 °C ergeben, der verklebte Körper danach pyrolysiert wird, und der so gebildete kohlenstoffhaltige mehrschichtige Verbund mit Silicium oder Siliciumlegierungen infiltriert wird, wobei zumindest ein Teil des Kohlenstoffs mit dem Silicium zu Siliciumcarbid reagiert.

14. Verfahren zur Herstellung von mehrschichtigen Keramik-Verbunden gemäß Anspruch 1, **dadurch gekennzeichnet, daß** eine Pressform mit mindestens drei verschieden zusammengesetzten Pressmassen befüllt wird, die die Vorläufer von Tragzone, Schutzschicht und Deckschicht sind, wobei die Presmassen für Tragzone und Deckschicht Kohlenstoffasern enthalten, und wobei die zur Schutzschicht führende Presmasse als glasbildende Additive Zusätze von hochschmelzenden Elementen, binären oder multinären Verbindungen mit Schmelztemperaturen von mindestens 1450 °C enthält, die durch Oxidation niedrigschmelzende Gläser mit einer Schmelztemperatur von höchstens 1250 °C ergeben, der gepresste Körper danach pyrolysiert wird, und der so gebildete kohlenstoffhaltige mehrschichtige Verbund mit Silicium oder Siliziumlegierungen infiltriert wird, wobei zumindest ein Teil des Kohlenstoffs mit dem Silicium zu Siliciumcarbid reagiert.

15. Verfahren nach Anspruch 13 oder 14, **dadurch gekennzeichnet, daß** der Vorkörper der Tragzone Verstärkungsfasern enthält ausgewählt aus Kohlenstoffasern, Graphitfasern und/oder kohlenstoffhaltigen Fasern.

16. Verfahren nach Anspruch 13 oder 14, **dadurch gekennzeichnet, daß** die zur Schutzschicht führende Mischung glasbildende Additive mit einer mittleren Partikelgröße von weniger als 120 µm enthält.

17. Verfahren nach Anspruch 13 oder 14, **dadurch gekennzeichnet, daß** die zur Schutzschicht führende Mischung glasbildende Additive ausgewählt aus Bor, Borcarbid, Calciumborid, Borsilicid, Aluminiumborid, Titanborid und Zirkonborid enthält.

18. Verfahren nach Anspruch 13 oder 14, **dadurch gekennzeichnet, daß** die Silicium enthaltende Schmelze ausschließlich über die Deckschicht mit dem Körper in Kontakt gebracht wird.

19. Verfahren nach Anspruch 13 oder 14, **dadurch gekennzeichnet, daß** der Mehrschicht-Verbund im Anschluß an die Infiltration und Reaktion mit dem Silicium in Luft oder einem Sauerstoff-haltigen Gasgemisch während einer ausreichenden Zeit auf eine Temperatur erhitzt wird, wodurch das glasbildende Additiv mindestens teilweise zu einem niedrigschmelzenden oxidischen Glas umgesetzt wird.

20. Verfahren nach Anspruch 19, **dadurch gekennzeichnet, daß** die Erhitzung auf Temperatur solange durchgeführt wird, bis der Massenanteil an Oxidphasen in der Schutzschicht 1 bis 80 % beträgt.

21. Verwendung von mehrschichtigen Keramik-Verbunden nach einem der Ansprüche 2 bis 12 als Bremsscheibe, Kupplungsscheibe oder Bremsbelag, insbesondere in Kraftfahrzeugen, Luftfahrzegen und Kraftmaschinen.

## Claims

1. Multilayer ceramic composite containing at least one composite material forming the supporting zone that contains oxidation-sensitive reinforcing fibres, and at least one ceramic surface layer, **characterised in that** the surface layer contains reinforcing fibres and that the composite material forming the supporting zone as well as the surface layer comprises a matrix that contains a mass proportion of at least 25% SiC and further phases containing Si or Si alloys, and/or carbon, in elemental form or as a compound, and the ceramic composite comprises at least one additional protective layer with a matrix that is composed substantially of at least one of the matrix phases of the supporting zone or surface layer, and that is situated between the supporting zone and surface layer and contains additives whose oxides are low-melting-point glasses having a melting point of at most 1250°C.

2. Multilayer ceramic composite according to claim 1, **characterised in that** the compositions of the composite material of the surface layer and of the supporting zone are different.

3. Multilayer ceramic composite according to claim 1 or 2, **characterised in that** the reinforcing fibres are selected from carbon fibres, graphite fibres and/or carbon-containing fibres.

4. Multilayer ceramic composite according to at least one of the preceding claims, **characterised in that** the additives in the protective layer are selected from high-melting point-elements, or binary or multinary compounds that have a melting point of at least 1450°C.

5. Multilayer ceramic composite according to claim 4, **characterised in that** the additives are selected from boron and non-oxidic boron compounds.

6. Multilayer ceramic composite according to claim 5, **characterised in that** the additives are selected from boron, boron carbide, calcium boride, boron silicide, aluminium boride, titanium boride and zirconium boride.

7. Multilayer ceramic composite according to claim 1, 2 or 3, **characterised in that** the additives are selected from alkali-metal and/or alkaline-earth metal and aluminium compounds, in particular their oxides.

8. Multilayer ceramic composite according to one of the preceding claims, **characterised in that** the volume proportion of reinforcing fibres in the protective layer is below 80%.

9. Multilayer ceramic composite according to one of the preceding claims, **characterised in that** the thickness of the protective layer is 0.02 to 5 mm.

10. Multilayer ceramic composite according to one of the preceding claims, **characterised in that** the thickness of the surface layer is less than 50% of the thickness of the supporting zone.

11. Multilayer ceramic composite according to one of the preceding claims, **characterised in that** the composite is in the shape of a cylindrical disc, and that the thickness of the surface layer is less than 20% of the thickness of the disc, but is at least 0.2 mm.

12. Multilayer ceramic composite according to one of the preceding claims, **characterised in that** the composite comprises a supporting zone and two surface layers, the supporting zone and surface layer in each case being joined together .over their surfaces by a protective layer.

13. Process for the production of multilayer ceramic composites according to claim 1, **characterised in that** a carbon-containing fibre-reinforced precursor forming the supporting zone and at least one carbon-containing precursor forming a surface layer are bonded together over their surfaces with an adhesive composition that, on pyrolysis, produces a porous, carbon-containing layer, wherein the adhesive composition contains, as glass-forming additives, admixtures of high-melting-point elements, binary or multinary compounds, in each case with melting points of at least 1450°C, which due to oxidation, produce low-melting-point glasses with a melting point of at most 1250°C, following which the bonded body is pyrolysed and the carbon-containing multilayer composite thereby formed is infiltrated with silicon or silicon alloys, at least part of the carbon reacting with the silicon to form silicon carbide.

14. Process for the production of multilayer ceramic composites according to claim 1, **characterised in that** a compression mould is filled with at least three moulding compositions of different compositions that constitute the precursors of the supporting zone, protective layer and surface layer, in which the moulding compositions for the supporting zone and surface layer contain carbon fibres and in which the moulding composition leading to the formation of the protective layer contains, as glass-forming additive, admixtures of high-melting point elements, binary or multinary compounds with melting points of at least 1450°C which, due to oxidation, produce low-melting point glasses with a melting point of at most 1250°C, following which the compressed body is pyrolysed and the carbon-containing multilayer composite thus formed is infiltrated with silicon or silicon alloys, at least part of the carbon reacting with the silicon to form silicon carbide.

15. Process according to claim 13 or 14, **characterised in that** the precursor of the supporting zone contains reinforcing fibres selected from carbon fibres, graphite fibres and/or carbon-containing fibres.

16. Process according to claim 13 or 14, **characterised in that** the mixture leading to the formation of the protective layer contains glass-forming additives which have a mean particle size of less than 120 µm.

17. Process according to claim 13 or 14, **characterised in that** the mixture leading to the formation of the protective layer contains glass-forming additives selected from boron, boron carbide, calcium boride, boron silicide, aluminium boride, titanium boride and zirconium boride.

18. Process according to claim 13 or 14, **characterised in that** the silicon-containing melt is brought into contact with the body exclusively over the surface layer.

19. Process according to claim 13 or 14, **characterised in that**, after the infiltration and reaction with the silicon, the multilayer composite is heated in air or in an oxygen-containing gas mixture for a sufficient time at an appropriate temperature, whereupon the glass-forming additive is at least partially converted into a low-melting-point oxidic glass.

20. Process according to claim 19, **characterised in that** the heating is carried out at an appropriate temperature until the mass fraction of oxide phases in the protective layer is 1 to 80%.

21. Use of multilayer ceramic composites according to one of claims 2 to 12 as brake discs, coupling discs or brake linings, in particular in vehicles, aircraft and engines.

## Revendications

1. Composite céramique multicouche contenant au moins un matériau composite formant la zone porteuse, qui contient des fibres de renforcement sensibles à l'oxydation et au moins une couche de couverture céramique,
**caractérisé en ce que**
la couche de couverture contient des fibres de renforcement, et aussi bien la zone porteuse que le matériau composite formant la couche de couverture présentent une matrice, qui contient au moins 25 % en masse de SiC, et d'autres phases, contenant du silicium ou des alliages de silicium, et/ou du carbone, sous forme élémentaire ou comme composé, et le composite céramique présente au moins une couche protectrice supplémentaire avec une matrice constituée essentiellement d'au moins une des phases de matrice de la zone porteuse ou de la couche de couverture, qui se trouve entre la zone porteuse et la couche de couverture et qui contient des additifs dont les oxydes sont des verres à bas point de fusion avec une température de fusion de 1250°C au maximum.

2. Composite céramique multicouche suivant la revendication 1,
**caractérisé en ce que**
les compositions du matériau composite de la couche de couverture et de la zone porteuse sont différentes.

3. Composite céramique multicouche suivant la revendication 1 ou 2,
**caractérisé en ce que**
les fibres de renforcement sont choisies parmi des fibres de carbone, des fibres de graphite et/ou des fibres carbonées.

4. Composite céramique multicouche suivant au moins l'une des revendications précédentes,
**caractérisé en ce que**
les additifs dans la couche protectrice sont choisis parmi des éléments à point de fusion élevé ou des composés binaires ou supérieurs, qui présentent une température de fusion d'au moins 1450°C.

5. Composite céramique multicouche suivant la revendication 4,
**caractérisé en ce que**
les additifs sont choisis parmi le bore et les composés borés non oxygénés.

6. Composite céramique multicouche suivant la revendication 5,
**caractérisé en ce que**
les additifs sont choisis parmi le bore, le carbure de bore, le borure de calcium, le siliciure de bore, le borure d'aluminium, le borure de titane et le borure de zirconium.

7. Composite céramique multicouche suivant la revendication 1, 2 ou 3,
**caractérisé en ce que**
les additifs sont choisis parmi des composés alcalins et/ou alcalino-terreux et d'aluminium, en particulier leurs oxydes.

8. Composite céramique multicouche suivant l'une des revendications précédentes,
**caractérisé en ce que**
la part en volume des fibres de renforcement est au-dessous de 80 %.

9. Composite céramique multicouche suivant l'une des revendications précédentes,
**caractérisé en ce que**
l'épaisseur de la couche protectrice est de 0,02 à 5 mm.

10. Composite céramique multicouche suivant l'une des revendications précédentes,
**caractérisé en ce que**
l'épaisseur de la couche de couverture est de moins de 50 % de l'épaisseur de la couche porteuse.

11. Composite céramique multicouche suivant l'une des revendications précédentes,
**caractérisé en ce que**
le composite a la forme d'un disque cylindrique et que l'épaisseur de la couche de couverture est de moins de 20 % de l'épaisseur du disque, mais d'au moins 0,2 mm.

12. Composite céramique multicouche suivant l'une des revendications précédentes,
**caractérisé en ce que**
le composite comporte une zone porteuse et deux couches de couverture, la zone porteuse et la couche de couverture étant chaque fois liées à plat par une couche protectrice.

13. Procédé pour la fabrication de composites céramiques multicouches selon la revendication 1,
**caractérisé en ce qu'**
une ébauche formant la zone porteuse, carbonée, renforcée par des fibres et au moins une ébauche carbonée formant une couche protectrice sont collées à plat par une pâte collante, qui donne par pyrolise une couche poreuse, carbonée, la pâte collante contenant, comme additifs formant du verre, des compléments d'éléments à point de fusion élevé, des composés binaires ou supérieurs, chacun avec des températures de fusion d'au moins 1450°C et donnant par oxydation des verres à bas point de fusion avec une température de fusion de 1250°C au maximum, le corps collé est ensuite pyrolisé, et le composite multicouche carboné est infiltré de silicium ou d'alliages de silicium, ce qui fait qu'au moins une partie du carbone réagit avec le silicium pour donner du carbure de silicium.

14. Procédé pour la fabrication de composites céramiques multicouches selon la revendication 1,
**caractérisé en ce qu'**
un moule est rempli d'au moins trois pâtes à presser de compositions différentes, qui sont les précurseurs de la zone porteuse, la couche protectrice et la couche de couverture, les pâtes à presser pour la zone porteuse et la couche de couverture contiennent des fibres de carbone, et la pâte à presser conduisant à la couche protectrice contient, comme additifs formant du verre, des compléments d'éléments à point de fusion élevé, des composés binaires ou supérieurs avec des températures de fusion d'au moins 1450°C et donnant par oxydation des verres à bas point de fusion avec une température de fusion de 1250°C au maximum, le corps pressé est alors pyrolisé, et le composite multicouche carboné ainsi formé est infiltré de silicium ou d'alliages de silicium, et au moins une partie du carbone réagit avec le silicium pour donner du carbure de silicium.

15. Procédé suivant la revendication 13 ou 14,
**caractérisé en ce que**
l'ébauche de la zone porteuse contient des fibres de renforcement choisies parmi des fibres de carbone, des fibres de graphite et/ou des fibres carbonées.

16. Procédé suivant la revendication 13 ou 14,
**caractérisé en ce que**
le mélange conduisant à la couche protectrice contient des additifs formant du verre avec une taille moyenne de particules de moins de 120 µm.

17. Procédé suivant la revendication 13 ou 14,
**caractérisé en ce que**
le mélange conduisant à la couche protectrice contient des additifs choisis parmi le bore, le carbure de bore, le borure de calcium, le siliciure de bore, le borure d'aluminium, le borure de titane, et le borure de zirconium.

18. Procédé suivant la revendication 13 ou 14,
**caractérisé en ce que**
la masse fondue contenant du silicium est mise en contact avec le corps exclusivement par la couche protectrice.

19. Procédé suivant la revendication 13 ou 14,
**caractérisé en ce que**
le composite multicouche, à la suite de l'infiltration et de la réaction avec le silicium dans l'air ou dans un mélange de gaz contenant de l'oxygène, est chauffé à une certaine température pendant un temps suffisant, ce qui fait que l'additif formant du verre est converti au moins partiellement en un verre à bas point de fusion contenant de l'oxygène.

20. Procédé suivant la revendication 19,
**caractérisé en ce que**
le chauffage à une certaine température est continué assez longtemps pour que la part massique de phases d'oxydes dans la couche protectrice soit de 1 à 80 %.

21. Utilisation de composites céramiques multicouches suivant l'une des revendications 2 à 12 comme disque de frein, disque d'embrayage ou revêtement de frein, en particulier dans des véhicules automobiles, des aéronefs et des machines motrices.
